# EUROPEAN PATENT APPLICATION

(11) **EP 4 718 924 A1**
(43) Date of publication of application: **01.04.2026**
(21) Application number: 24850488.8
(22) Date of filing: 12.03.2024
(51) Int. Cl.: H04W 68/00

(54) **PAGING METHOD AND RELATED DEVICE**

(30) Priority: 10.08.2023 CN 202311010529
(71) Applicant: Honor Device Co., Ltd., Shenzhen, Guangdong 518040 (CN)
(72) Inventor: SHAN, Baokun, Shenzhen, Guangdong 518040 (CN)
(74) Representative: Isarpatent
(86) International application number: PCT/CN2024/081099
(87) International publication number: WO 2025/030828

(57) **Abstract**

This application provides a paging method and a relevant device, and belongs to the technical field of communications. The paging method is applied to a terminal device, and includes: sending first information, where the first information is used for indicating WUS supporting capability of the terminal device or expected WUS subgroup information of the terminal device; receiving first configuration information, where the first configuration information includes WUS subgroups corresponding to the terminal device; and monitoring WUS before a PO according to WUS supporting capability of a base station and the WUS subgroups corresponding to the terminal device. According to the method, the simper WUS is utilized to indicate whether the corresponding terminal device needs to monitor the paging or not before the PO, so that the problem of too high power consumption caused by additional monitoring of paging messages by the terminal device is solved.

## Description

This application claims priority to Chinese Patent Application No. 202311010529.7, entitled "PAGING METHOD AND RELEVANT DEVICE" filed with the China National Intellectual Property Administration on August 10, 2023, which is incorporated herein by reference in its entirety.

### TECHNICAL FIELD

This application relates to the technical field of communications, and in particular, to a paging method and a relevant device.

### BACKGROUND

In a mobile communication system, when a network device sends downlink data to a terminal device in a non-connected state and/or updates system information, the network device needs to page the terminal device. According to a traditional paging mode, all terminal devices need to periodically monitor physical downlink control channel (physical downlink control channel, PDCCH) messages, so that the power consumption of the terminal devices is high. From Release 15 (release 15, R15) to Release 17 (release 17, R17) of a 3^{rd} generation partnership project (3^{rd} generation partnership project, 3GPP), an optimization solution of paging is continuously studied in the standard evolution of the 3GPP to reduce the energy consumption of the terminal device in the paging process.

At present, wake up service (wake up service, WUS) and wake up receiver (wake up receiver, WUR) features of Release 18 (release 18, R18) of the 3GPP are under discussion. How to further reduce the paging power consumption by utilizing WUS becomes a problem widely concerned in the industry.

### SUMMARY

This application provides a paging method and a relevant device. Terminal devices are subjected to subgrouping corresponding to WUS, a simper WUS is utilized to indicate whether the terminal device in a corresponding group needs to monitor the paging or not before a PO, so that the problem of too high power consumption caused by additional monitoring of paging messages by the terminal device is solved.

In a first aspect, a paging method is provided, is applied to a terminal device, and includes:
sending first information, where the first information is used for indicating wake up service WUS supporting capability of the terminal device or expected WUS subgroup information of the terminal device;
receiving first configuration information, where the first configuration information includes WUS subgroups corresponding to the terminal device; and
monitoring WUS before a paging occasion PO according to the WUS supporting capability of a base station and the WUS subgroups corresponding to the terminal device.

In a possible implementation, the WUS supporting capability of the base station, for example, may include a quantity of WUS subgroups supported by the base station, or a quantity of WUS states supported by the base station. According to the WUS supporting capability of the base station and the WUS subgroups corresponding to the paged terminal device, both the base station and the terminal device may obtain whether the base station supports the WUS subgroup in which the paged terminal device is located or not.

In a possible implementation, that the terminal device monitors the WUS before the PO according to the WUS supporting capability of the base station and the WUS subgroup corresponding to the terminal device may specifically include: according to the WUS supporting capability of the base station or the subgroup corresponding to the terminal device, the terminal device determines to monitor the WUS before the PO (that is, the paging monitoring mode is determined to firstly monitor the WUS and then monitor the PO); and then, the terminal device may firstly monitor the WUS before the PO in a determined paging monitoring mode, and after the corresponding WUS is monitored, the terminal device monitors scheduling information of a PDCCH paging message of the PO.

After obtaining the WUS subgroup corresponding to the terminal device itself, the terminal device may obtain whether the base station supports the WUS subgroup corresponding to the terminal device or not according to WUS configuration of the base station. If that the base station supports the WUS subgroup corresponding to the terminal device is obtained, the terminal device may monitor the WUS before the PO. Otherwise, the terminal device directly monitors the PEI or directly monitors the PO.

According to the paging method provided by this implementation, by introducing the simpler WUS and respectively and singly indicating whether the PO needs to be monitored or not by using the PEI and the WUS, some terminal devices, especially seldomly paged terminal devices may determine whether they need to monitor and decode the PDCCH or not only based on the WUS, so that the resource consumption of the terminal devices is reduced.

In combination with the first aspect, in some implementations of the first aspect, the monitoring WUS before a PO according to the WUS supporting capability of a base station and the WUS subgroups corresponding to the terminal device specifically includes:
monitoring the WUS before the PO when the base station supports the WUS subgroups corresponding to the terminal device.

In combination with the first aspect, in some implementations of the first aspect, the method further includes:
monitoring PEI before the PO, or directly monitoring a physical downlink control channel PDCCH at the PO when the base station does not support the WUS subgroups corresponding to the terminal device.

In a possible implementation, that the terminal device directly monitors the PDCCH at the PO may specifically indicate that the terminal device directly monitors the scheduling information of the PDCCH paging message at the PO.

In combination with the first aspect, in some implementations of the first aspect, the method further includes:
receiving second configuration information broadcasted by the base station, wherein the second configuration information comprises the WUS supporting capability of the base station.

In a possible implementation, the configuration information may further include a total quantity of subgroups of the paging occasion PO and/or a quantity of UE ID-based subgroups corresponding to the terminal device. The UE ID-based subgroups, for example, may correspond to the PEI subgroups below.

In combination with the first aspect, in some implementations of the first aspect, the WUS supporting capability of the base station includes the quantity of WUS subgroups supported by the base station.

The monitoring WUS before a PO according to the WUS supporting capability of a base station and the WUS subgroups corresponding to the terminal device specifically includes:
monitoring the WUS before the PO when that the base station supports the WUS subgroups corresponding to the terminal device is obtained according to the quantity of the WUS subgroups supported by the base station.

In combination with the first aspect, in some implementations of the first aspect, the monitoring the WUS before the PO when that the base station supports the WUS subgroups corresponding to the terminal device is obtained according to the quantity of the WUS subgroups supported by the base station specifically includes:
monitoring the WUS before the PO when the quantity of the WUS subgroups supported by the base station is equal to or greater than a quantity of the WUS subgroups corresponding to the terminal device.

In combination with the first aspect, in some implementations of the first aspect, the method further includes:
when the quantity of the WUS subgroups supported by the base station is smaller than the quantity of the WUS subgroups corresponding to the terminal device, monitoring the PEI before the PO, or directly monitoring the PDCCH at the PO.

In combination with the first aspect, in some implementations of the first aspect, the method further includes:
obtaining paging subgroups corresponding to the terminal device;
monitoring the PDCCH at the PO when the WUS is monitored; or
monitoring the PDCCH at the PO when the PEI is monitored.

In combination with the first aspect, in some implementations of the first aspect, the second configuration information may further include a total quantity of subgroups of the PO, the first configuration information further includes CN subgroups configured by a core network, and the obtaining paging subgroups corresponding to the terminal device specifically includes:
obtaining the paging subgroups corresponding to the terminal device according to the total quantity of subgroups of the PO and/or the CN subgroups configured by the core network for the terminal device.

In combination with the first aspect, in some implementations of the first aspect, the obtaining a paging subgroup corresponding to the terminal device specifically includes:
obtaining the paging subgroups corresponding to the terminal device according to the total quantity of subgroups of the PO and/or the CN subgroups configured by the core network for the terminal device.

In combination with the first aspect, in some implementations of the first aspect, the method further includes:
receiving a group fallback indication message, where the group fallback indication message is used for indicating the terminal device to monitor the WUS or monitor the PEI when the base station does not support the WUS subgroups corresponding to the terminal device; and
in response to the group fallback indication message, performing fallback to the PEI monitoring by the PEI subgroups corresponding to the terminal device.

In a possible implementation, through the fallback indication message, the base station may indicate the terminal device to change to another paging subgroup. That is, another paging subgroup different from the current paging subgroup corresponding to the terminal device may be designated for the terminal device. The terminal device may change the corresponding paging subgroup in response to the fallback indication message. The changed paging subgroup of the terminal device may be a paging subgroup supported by the WUS of the base station. At this moment, the terminal device may monitor the WUS. Or, the changed paging subgroup of the terminal device may be a paging subgroup which is still not supported by the WUS of the base station. At this moment, the terminal device may monitor the PEI. The resource consumption of the monitoring by terminal devices which originally belong to the same paging subgroup (the paging subgroup before change) as the terminal device may be reduced.

In combination with the first aspect, in some implementations of the first aspect, the method further includes:
monitoring the WUS before each PO according to a paging cycle.

In a second aspect, a paging method is provided, is applied to a base station, and includes:
sending second configuration information to the terminal device, where the second configuration information includes WUS supporting capability of the base station;
receiving a paging message, where the paging message includes WUS subgroups corresponding to a paged terminal device; and
sending the WUS before the PO according to the WUS supporting capability of the base station and the WUS subgroups corresponding to the terminal device.

In combination with the second aspect, in some implementations of the second aspect, the sending the WUS according to the WUS supporting capability of the base station and the WUS subgroups corresponding to the paged terminal device specifically includes:
sending the WUS before the PO when that the base station supports the WUS subgroups corresponding to the terminal device is obtained according to a quantity of the WUS subgroups supported by the base station.

In combination with the second aspect, in some implementations of the second aspect, the sending the WUS before the PO when that the base station supports the WUS subgroups corresponding to the terminal device is obtained according to a quantity of the WUS subgroups supported by the base station specifically includes:
sending the WUS before the PO when the quantity of the WUS subgroups supported by the base station is equal to or greater than a quantity of the WUS subgroups corresponding to the terminal device.

In a possible implementation, when the quantity of the WUS subgroups supported by the base station is equal to or greater than the quantity of the WUS subgroups corresponding to the terminal device, it may be determined that the base station supports the WUS subgroups corresponding to the terminal device, and the WUS is sent before the PO.

In combination with the second aspect, in some implementations of the second aspect, the method further includes:
obtaining that the base station does not support the WUS subgroups corresponding to the terminal device when the quantity of the WUS subgroups supported by the base station is smaller than the quantity of the WUS subgroups corresponding to the terminal device; and
sending the PEI before the PO, or directly sending scheduling information of the PDCCH paging message at the PO.

In combination with the second aspect, in some implementations of the second aspect, the method further includes:
receiving first information sent by the terminal device, where the first information is used for indicating WUS supporting capability of the terminal device or expected WUS subgroup information of the terminal device;
forwarding the WUS supporting capability of the terminal device or the expected WUS subgroup information of the terminal device to a core network;
receiving WUS subgroup information configured by the core network for the terminal device; and
sending the WUS subgroup information to the terminal device.

In combination with the second aspect, in some implementations of the second aspect, the paging message further includes an identification of the paged terminal device, and the method further includes:
sending the identification of the paged terminal device and the WUS subgroup information corresponding to the paged terminal device to another base station.

In a third aspect, a terminal device is provided, and includes:
one or more processors; and
one or more memories.

The one or more memories have one or more computer programs stored therein, the one or more computer programs include an instruction, and the instruction, when executed by the one or more processors, enables the terminal device to implement the method according to any one of the first aspect or the second aspect.

In a fourth aspect, a base station is provided, and includes:
one or more processors; and
one or more memories.

The one or more memories have one or more computer programs stored therein, the one or more computer programs include an instruction, and the instruction, when executed by the one or more processors, enables the base station to implement the method according to any one of the first aspect or the second aspect.

In a fifth aspect, a communication system is provided, and includes a terminal device and a base station. The terminal device is configured to implement the method according to any one of the first aspect, and the base station is configured to implement the method according to any one of the second aspect.

In a sixth aspect, a computer-readable storage medium is provided and has a computer-executable program instruction stored therein, and the computer-executable program instruction, when running in a computer, enables the computer to implement the method according to any one of the first aspect.

In a seventh aspect, a computer program product is provided, and includes computer program code, and the computer program code, when running in a computer, enables the computer to implement the method according to any one implementation of the first aspect.

### BRIEF DESCRIPTION OF DRAWINGS

FIG. 1 is a schematic diagram of a paging mechanism based on R15 provided by embodiments of this application;
FIG. 2 is a schematic diagram of a paging condition based on R15 provided by embodiments of this application;
FIG. 3 is a schematic diagram of a paging mechanism based on R17 provided by embodiments of this application;
FIG. 4 is a schematic flow chart of PEI subgroup allocation on a terminal device provided by embodiments of this application;
FIG. 5 is a schematic structure diagram of a terminal device 100 provided by embodiments of this application;
FIG. 6 is a block diagram of a software structure of a terminal device 100 of embodiments of this application;
FIG. 7 is a schematic flow chart of a paging method provided by embodiments of this application;
FIG. 8 is a schematic diagram of performing paging monitoring based on WUS provided by embodiments of this application; and
FIG. 9 is a schematic flow chart of another paging method provided by embodiments of this application.

### DESCRIPTION OF EMBODIMENTS

It needs to be noted that terms used in implementation parts of embodiments of this application are merely used for explaining specific embodiments of this application, and are not intended to limit this application. In the descriptions of the embodiments of this application, unless otherwise specified, "/" means "or". For example, A/B may represents A or B. In this specification, "and/or" is merely an association relationship for describing associated obstacles and represents that there may be three relationships, for example, A and/or B may mean that there are three cases of A alone, A and B together, and B alone. In addition, in the descriptions of the embodiments of this application, unless otherwise specified, "a plurality of" means two or more than two, and "at least one" and "one or more" mean one, two, or more.

Hereafter, terms "first" and "second" are only used for description purposes, and cannot be understood as indicating or implying relative importance or impliedly indicating the quantity of the indicated technical features. Therefore, features defined by "first" and "second" may explicitly or implicitly include one or more such features.

Reference to "one embodiment", "some embodiments", or the like in this specification means that a specific feature, structure, or characteristic described in combination with this embodiment is included in one or more embodiments of this application. Therefore, phrases "in one embodiment", "in some embodiments", "in some other embodiments", "in some additional embodiments", and the like described in different places in this specification do not necessarily refer to the same embodiment, but mean "one or more but not all embodiments", unless otherwise specifically emphasized in other modes. Terms "include", "comprise", "have", and variants thereof all mean "include but are not limited to", unless otherwise specifically emphasized in other modes.

The technical solution of this application will be described in detail with reference to specific embodiments below. The following specific embodiments may be mutually combined, and the same or similar concepts or processes may not be repeatedly described in some embodiments.

For a better understanding of a paging method provided by an embodiment of this application, terms or definitions that may be used below are described at first.

### 1. Paging (paging)

Paging is a process of searching for a terminal device initiated by a network side. A triggering condition of paging may include that the network side has signaling or data needing to be sent to the terminal device. When the terminal device is in a non-connected state, the network side cannot directly send data to the terminal device, and even the network side cannot obtain a current specific location of the terminal device. In this case, the network side needs to initiate a paging process. The purpose of the paging is to notify the terminal device that the network side has signaling or data needing to be sent to the terminal device. After receiving a paging message, the terminal device may actively trigger to establish a connection to the network side, so that the terminal device enters a connected state, and may thus exchange data with the network side.

Initiating a paging action by the network side may be understood as sending, by a core network side, a paging message to a base station. The paging message may include a unique user equipment identification (user equipment identificantion, UE ID) of the terminal device. The paging message may be carried by a paging control channel (paging control channel, PCCH) mapped to a paging channel (paging channel, PCH), and the PCH may be mapped to a physical downlink shared channel (physical downlink shared channel, PDSCH).

### 2. Radio network temporary identity (radio network temporary identity, RNTI)

An RNTI is configured to distinguish or identify different terminal devices in a connected state, a specific radio channel, and a group of terminal devices in a paging case in a radio network.

A plurality of types of RNTIs are defined for the new radio in 3GPP specification 38.321. A paging RNTI (paging RNTI, P-RNTI) is configured by a terminal device to receive paging. The P-RNTI is a common RNTI, and may be unexplicitly allocated to any one terminal device. After a cyclic redundancy check (cyclic redundancy check, CRC) of the PDCCH is scrambled through the P-RNTI, it indicates that current downlink control information (downlink control information, DCI) is scheduling information of the paging message. After successfully decoding the PDCCH, the terminal device may receive the paging message from the corresponding PDSCH according to the scheduling information of the paging message.

### 3. Non-connected state

In the embodiments of this application, a non-connected state may include an idle (idle) state and an inactive (inactive) state. In a basic paging processing specified in R15, when the terminal device is in the non-connected state, the terminal device may periodically receive a paging message.

### 4. Paging early indication (paging early indication, PEI)

PEI is indication information sent before a paging occasion (paging occasion, PO), and the indication information may be used for indicating whether scheduling information of a PDCCH paging message is sent at the corresponding PO or not. Optionally, the PEI may also be referred to as early paging indication (early paging indication, EPI), or early indication (early indication) of paging, or advanced paging indication (advanced paging indication), or may also be referred to as another name. This is not limited in this application. The PEI may be a type of DCI. In the paging process, the base station may add indication information to the PEI to indicate to the terminal device that this paging is initiated for a terminal device in which PEI subgroup. After receiving the PEI, the terminal device may determine whether the terminal device needs to monitor a paging message in the subsequent PO.

With reference to descriptions in the background, in the 4^{th} generation mobile communication technology (4^{th} generation mobile communication technology, 4G) and the 5^{th} generation mobile communication technology (5^{th} generation mobile communication technology, 5G), a terminal device in a radio resource control idle (radio resource control idle, RRC-IDLE) state and/or an RRC-inactive (RRC-inactive) state may periodically monitor paging, and may further initiate a procedure such as RRC connection establishment and recovery in response to the paging, so as to perform a downlink service. One of the objectives of periodically monitoring paging is to prevent the terminal device from continuously monitoring downlink data, so as to reduce resource consumption of the terminal device. Notwithstanding, the 3GPP standard evolution aims at further researching an optimized solution of paging to continuously reduce the energy consumption of the terminal device in the paging process. For example, based on conventional paging, a PEI technology supporting paging subgrouping is introduced by R17 in 3GPP. Terminal devices associated with one PO are subgrouped (an obtained subgroup may be referred to as a PEI subgroup), and then, paging indication is performed based on the PEI subgroup identification to reduce a probability of false paging alarms (false paging alarms). In the discussion of 3GPP R18, it is further considered that a lower-power-consumption wake up service WUS is introduced to reduce the power consumption of the terminal device. Specifically, the WUS may be introduced before the PO, so that the terminal device (especially, the terminal device which is not paged) replaces conventional PDCCH detection at the PO with the WUS achieving simpler detection, so as to achieve the purpose of reducing the power consumption of receiving paging.

In order to better understand the paging method provided by an embodiment of this application, relevant processes of paging respectively corresponding to R15 to R17 in 3GPP are described below.

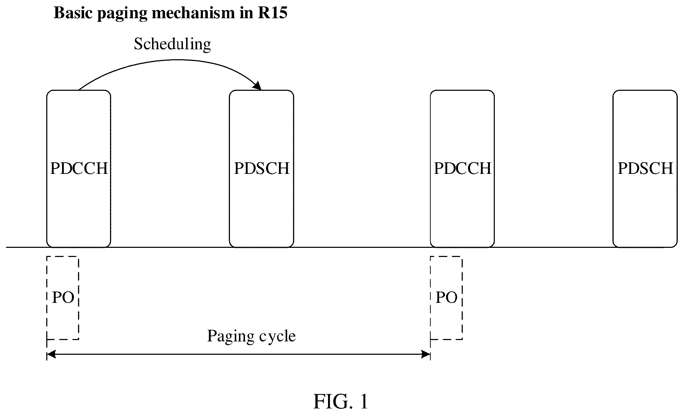

Firstly, as shown in FIG. 1, a schematic diagram of a basic paging mechanism corresponding to R15 is provided. Specifically, when the terminal device in a non-connected state is paged by the network side (specifically, it may be a core network device, such as an access and mobility management function (access and mobility management function, AMF) module), the terminal device may wake up at a self associated PO according to a paging cycle (paging cycle) to monitor the scheduling information (such as a time-frequency resource and a modulation and decoding mode) of a PDCCH paging message, and the scheduling information is used for indicating how to obtain and decode a subsequent PDCCH paging message. The PO calculation is associated with the unique user equipment identification (user equipment identification, UE ID) of the terminal device and the paging cycle, and a plurality of terminal devices may share one PO. When the PDCCH is monitored at the PO, the terminal device may firstly use a P-RNTI to decode the PDCCH. If the decoding is successful, the paging message (paging message) is received at a PDSCH resource response position according to the scheduling information of the PDSCH paging message. If the terminal device receives the paging message, and the paging message includes the unique UE ID corresponding to the terminal device, the terminal device is paged, and the terminal device may initiate procedure response such as RRC connection establishment and recovery to the base station to enter a connected state and receive a downlink service; and if the terminal device detects no PDCCH scrambled by the P-RNTI, or the received paging message does not include the UE ID corresponding to the terminal device, the terminal device is not paged, and the terminal device does not need to monitor the PDSCH paging message, and may continuously return to a dormant state.

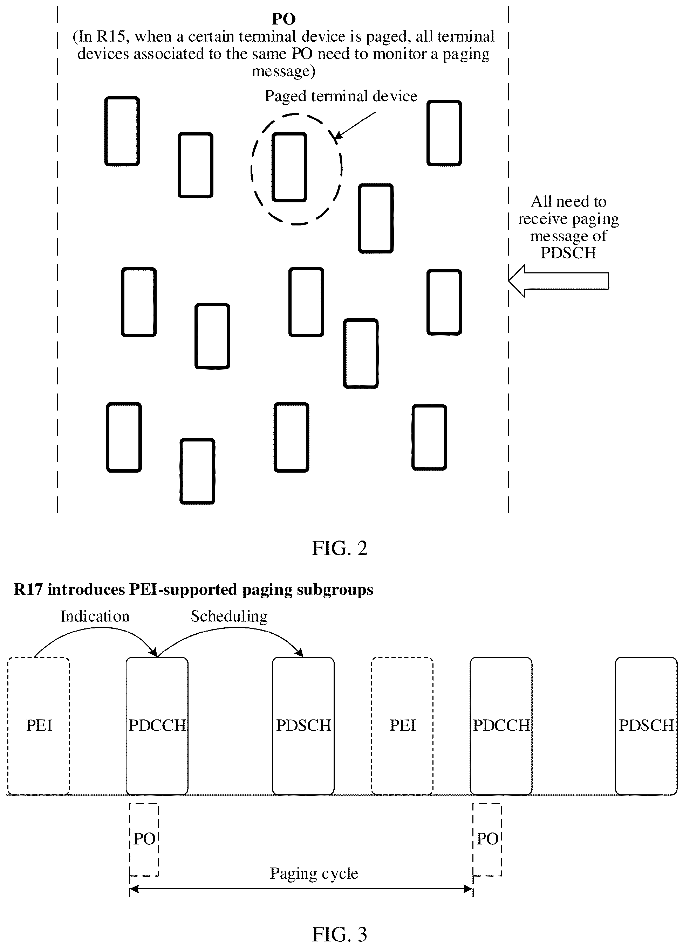

In combination with FIG. 2, it needs to be noted that one PO may be shared by a plurality of terminal devices, so when one terminal device at the PO is paged, all terminal devices associated with the same PO need to monitor the paging message. That is, as long as one terminal device is paged, other associated terminal devices at the same PO need to further receive the PDSCH paging message. For these terminal devices, this case belongs to false paging alarms, and the PDSCH receiving power consumption belongs to unnecessary power consumption waste. Therefore, in order to further reduce the PDCCH monitoring power consumption of the terminal device in an idle state, a PEI solution is provided in R17. The PEI solution provided in R17 will be described below in combination with the accompanying drawings.

Referring to FIG. 3, the difference from the paging solution in R15 is that in the PEI solution in R17, different terminal devices may be further divided into different subgroups (subgroup) (referred to as PEI subgroup hereafter), and each PEI subgroup may correspond to one PEI ID. In the paging process, based on the PEI solution in R17, a PEI occasion (PEI occasion, PEI-O) may be inserted before each PO. At this PEI occasion, the terminal device may obtain the PEI broadcasted by the base station, and this PEI may include an ID corresponding to the PEI subgroup to which the paged terminal device belongs. After decoding the PEI, the terminal device may determine whether the self belongs to the paged PEI subgroup or not based on the carried PEI subgroup ID. If the PEI subgroup ID obtained by the terminal device is consistent with the self affiliated PEI subgroup ID, it may be determined that the terminal device needs to monitor and decode the PDCCH at the PO in the subsequent process, and the paging message is received at the PDSCH resource response position based on the scheduling information of the PDCCH paging message; and if the PEI obtained by the terminal device does not include the ID corresponding to the self affiliated PEI subgroup, it may be determined that the terminal device and the paged terminal device do not belong to the same PEI subgroup, and the terminal device does not need to monitor and demodulate the PDCCH at the PO in the subsequent process, and does not need to further receive the paging message.

In some embodiments, the base station may broadcast the configuration information of the PEI subgroup to the terminal device through an RRC message. The configuration information of the PEI subgroup, for example, may be a sequence. The terminal device may calculate the PEI subgroup to which the terminal device belongs based on the configuration information of the PEI subgroup sent by the base station, and may obtain the ID corresponding to the PEI subgroup to which the terminal device belongs.

It needs to be noted that the reason why the purpose of reducing the power consumption of the terminal device may be achieved by introducing the PEI solution mainly includes the following two aspects: On one hand, the base station indicates, to the terminal device before the PO associated with the terminal device, whether there is a potential incoming paging (incoming paging) or not. If there is no paging needing to be received by the terminal device, after receiving the corresponding PEI indication, the terminal device does not need to wake up at the self associated PO to monitor and decode the PDCCH, so that the resource consumption of the terminal device is reduced. On the other hand, the PEI subgroup is achieved by further subgrouping the terminal devices, so that a search space of the PEI is smaller than a search space of the PO, the power consumption of demodulating the PEI once is smaller than the power consumption of demodulating the PO once, and the power consumption of the terminal device may be reduced.

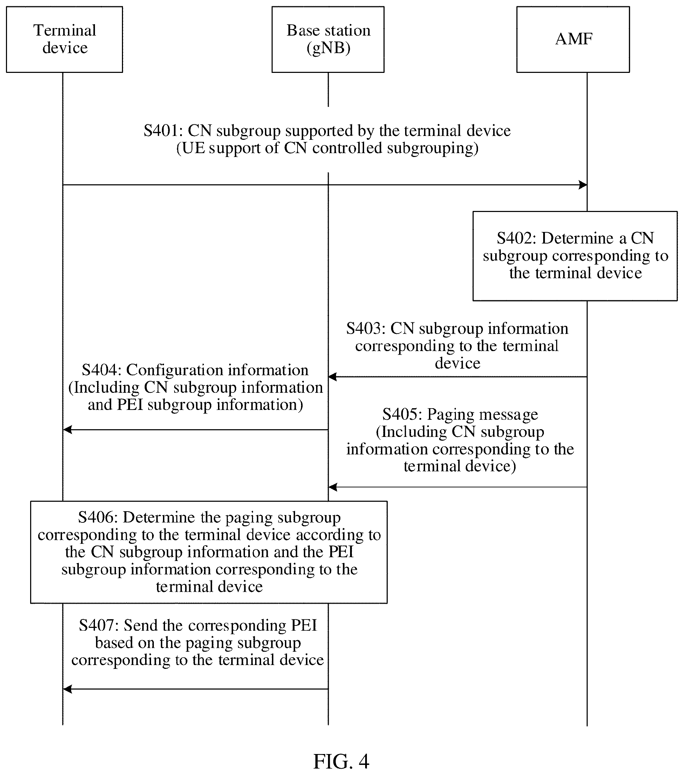

A process of dividing different terminal devices to different PEI subgroups will be described hereafter in combination with the accompanying drawings. Exemplarily, as shown in FIG. 4, a schematic flow chart of dividing PEI subgroups provided by the embodiments of this application is provided. This flow process specifically includes the following steps:
S401: The terminal device sends a CN subgroup supported by the terminal device to an AMF.

The CN subgroup (CN subgroup) may refer to a subgroup configured by the core network (such as AMP) for the terminal device.

In some embodiments, when the terminal device supports the CN subgroup, or expects to be divided to a certain CN subgroup, the terminal device may send the CN subgroup supported by the terminal device (UE support of CN controlled subgrouping) to the AMF. Specifically, the terminal device may send the CN subgroup supported by the terminal device to the AMF through the base station (such as gNB).

S402: The AMF determines the CN subgroup corresponding to the terminal device.

In some embodiments, the AMF may configure the corresponding CN subgroup for the terminal device based on the CN subgroup supported by the terminal device. The CN subgroup configured by the AMF for the terminal device may be consistent with the CN subgroup supported by the terminal device.

S403: The AMF sends the CN subgroup information corresponding to the terminal device to the base station.

The CN subgroup information, for example, may include the ID of the CN subgroup configured by the AMF for the terminal device, and/or other data for calculating the CN subgroup to which the terminal device belongs.

S404: The base station broadcasts the configuration information to the terminal device.

In some embodiments, the configuration information broadcasted by the base station to the terminal device may include the total quantity of subgroups of the PO associated with the terminal device and the PEI subgroup information corresponding to the terminal device. The PEI subgroup information may include data (for example, a sequence) for calculating the PEI subgroup to which the terminal device belongs.

In some embodiments, the configuration information may further include CN subgroup information corresponding to the terminal device. The CN subgroup information, for example, may include the CN subgroup ID corresponding to the terminal device, or data (for example, a sequence) for calculating the CN subgroup corresponding to the terminal device.

In some embodiments, the base station may periodically broadcast the configuration information.

S405: The AMF sends a paging message to the base station.

In some embodiments, when there is signaling needing to be sent to the terminal device at the network side, a paging process may be initiated. Specifically, the network side AMF may send the paging message to the base station, and the paging message may include the UE ID of the paged terminal device and the affiliated CN subgroup information of the paged terminal device (such as the CN subgroup ID or other data for calculating the CN subgroup to which the terminal device belongs).

S406: The base station and the terminal device determine the paging subgroup corresponding to the terminal device according to the CN subgroup information and the PEI subgroup information corresponding to the terminal device.

The paging subgroup here may be unique, may refer to a subgroup uniquely associated with the terminal device during PEI receiving, or may refer to a subgroup where the terminal device is actually located during PEI receiving. The paging subgroup may be the CN subgroup corresponding to the terminal device or the PEI subgroup corresponding to the terminal device.

It needs to be noted that the CN subgroup is obtained by the terminal device and the core network through negotiation. However, in some cases, the base station may not support the CN subgroup or only supports some CN subgroups. Therefore, the base station needs to configure the subgroups (i.e., the PEI subgroups) for the terminal device based on the UE ID on the basis of the own capability. Then, the base station and the terminal device may determine the paging subgroup corresponding to the terminal device based on the PEI subgroup configured by the base station and the CN subgroup configured by the core network according to a preset mode.

It needs to be noted further that determining the paging subgroup corresponding to the terminal device based on the CN subgroup information and the PEI subgroup information is to enable the base station and the terminal device to align the information of the subgroup in which the terminal device is located, so that the terminal device in the subgroup may accurately obtain the corresponding PEI in the subsequent process, and the more accurate indication of whether to monitor the PDCCH or not may be obtained.

In some embodiments, a mode of the base station and the terminal device for determining the paging subgroup corresponding to the terminal device may include: determining the paging subgroup ID according to the total quantity of subgroups at the PO associated with the terminal device and the quantity of UE ID-based PEI subgroups at the PO. The total quantity of subgroups at the PO associated with the terminal device may refer to the sum of the quantity of the CN subgroups at the PO and the quantity of the UE ID-based PEI subgroups. Specifically, if the base station simultaneously configures the total quantity of subgroups at the PO and the quantity of the UE ID-based PEI subgroups by aiming at the terminal device, and the total quantity of subgroups at the PO is equal to the quantity of the PEI subgroups, the ID of the paging subgroup in which the terminal device is located is determined based on the PEI subgroups corresponding to the terminal device. The ID of the paging subgroup, for example, may be the PEI subgroup ID corresponding to the terminal device. If the base station simultaneously configures the total quantity of subgroups at the PO and the quantity of the UE ID-based PEI subgroups by aiming at the terminal device, and the quantity of the PEI subgroups is smaller than the total quantity of subgroups at the PO, the ID of the paging subgroup in which the terminal device is located is determined based on the CN subgroup corresponding to the terminal device, and the ID of the paging subgroup, for example, may be the CN subgroup ID corresponding to the terminal device.

In some embodiments, the total quantity of subgroups at the PO may be eight, and serial numbers may be respectively 0 to 7. A relationship among the total quantity of subgroups at the PO, the quantity of the CN subgroups, and the quantity of the PEI subgroups may be: the total quantity of subgroups at the PO-the quantity of the PEI subgroups=the quantity of the CN subgroups.

It needs to be noted that in the embodiments of this application, the PEI subgroups correspond to groups configured by the base station for the terminal device based on the UE ID, and the CN subgroups correspond to groups configured by the core network (such as AMF) and the terminal device through negotiation. When the core network initiates paging, the AMF may send the CN subgroup corresponding to the terminal device to the base station, and the base station determines a practical paging subgroup corresponding to the terminal device based on the above mode in combination with the PEI configuration according to the CN subgroup corresponding to the terminal device. Similarly, the terminal device may further obtain the practical paging subgroup corresponding to the terminal device in a similar mode.

It further needs to be noted that the embodiments of this application do not limit the implementation sequence of S405 and S406, the operation in S406 may be implemented before S405, may be implemented after S405, or may be implemented at the same time as S405.

S407: The base station sends the corresponding PEI based on the paging subgroup corresponding to the terminal device.

In some embodiments, after the base station obtains the paging message sent by the AMF, the PEI may be broadcasted in response to the paging message, and the PEI may carry the ID of the paging subgroup corresponding to the paged terminal device.

In some embodiments, after the terminal device obtains the PEI, whether the terminal device needs to monitor and decode the PDCCH at the PO or not may be obtained based on the carried paging subgroup ID. If the paging subgroup ID carried by the PEI is consistent with the paging subgroup ID corresponding to the terminal device, the terminal device needs to monitor and decode the PDCCH at the PO; and if the PEI does not carry the paging subgroup ID, or the paging subgroup ID carried by the PEI is different from the paging subgroup ID corresponding to the terminal device, the terminal device does not need to monitor or decode the PDCCH at the PO, and may return to a dormant state.

From the above process, it may be seen that in the solution of supporting paging subgroups by the PEI in R17, the terminal device needs to monitor and decode the PEI to determine whether it needs to monitor the PDCCH at the PO or not. However, the PEI belongs to a DCI, and decoding the PEI also needs to consume more resources of the terminal device, so that the power consumption increase of the terminal device may be caused.

Therefore, the embodiments of this application provide a paging method. The simper WUS is introduced based on the PEI indication, the WUS is used for indicating whether the terminal device needs to monitor the PO or not, so that some terminal devices, particularly terminal devices which are not often paged do not need to decode the PEI, and whether the PDCCH needs to be monitored and decoded or not may be determined only based on WUS, so that the resource consumption of the terminal device is reduced.

The paging method provided by the embodiment of this application may be applied to any scenario of paging the terminal device by the core network. The terminal devices in the embodiments of this application may be electronic devices of various types, such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, PDA). Exemplary embodiments of the electronic devices include but are not limited to portable terminal devices with Android^{®} or other operating systems. The terminal device may further be a desktop computer with a touch-sensitive surface (for example, a touch panel), etc. A specific type of the terminal device is not limited in the embodiments of this application.

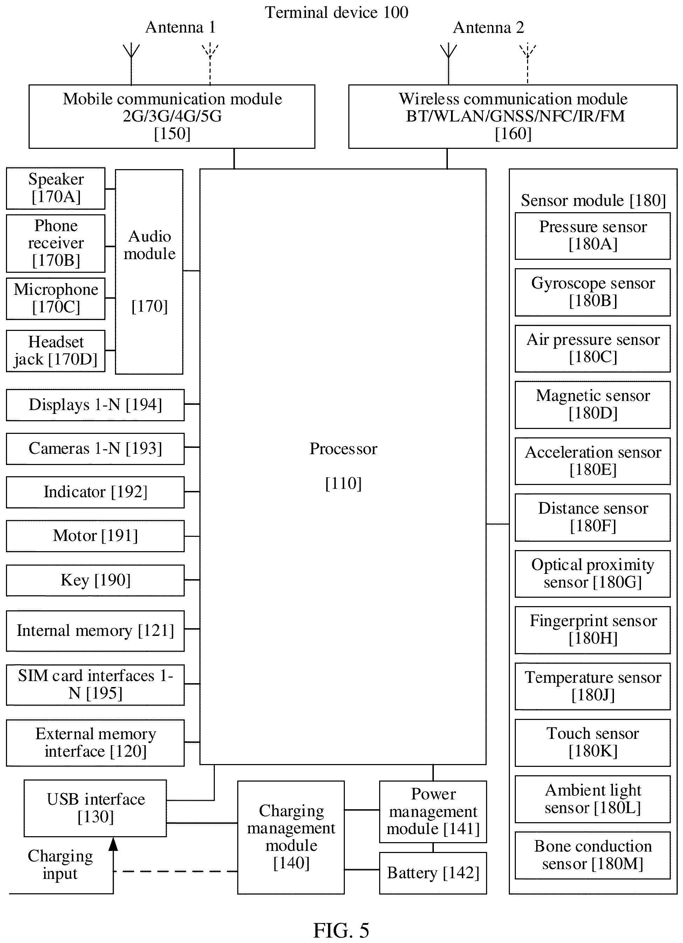

Exemplarily, as shown in FIG. 5, a schematic structure diagram of a terminal device 100 provided by the embodiments of this application is provided.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in embodiments of the present invention does not constitute a specific limitation on the terminal device 100. In some other embodiments of this application, the terminal device 100 may include more or fewer components than those shown in the figures, or may combine some components or split some components, or have different component arrangements. The components shown in the figures may be implemented by using hardware, software, or a combination of software and hardware.

The processor 110 may include one or more processing units. For example, the processor 110 may include an application processor (Application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), etc. Different processing units may be independent components, or may be integrated into one or more processors.

The controller may be a nerve center and a command center of the terminal device 100. The controller may generate an operation control signal according to instruction operation code and a timing signal, to complete the control of obtaining and executing instructions.

A memory may be further arranged in the processor 110, and is configured to store instructions and data. In some embodiments, the memory in the processor 110 is a cache memory. The memory may store instructions or data that is just used or cyclically used by the processor 110. If the processor 110 needs to use the instructions or the data again, it may directly call the instructions or the data from the memory. Repeated access is avoided, and the waiting time of the processor 110 is reduced, so that the system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, etc.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be respectively coupled to a touch sensor 180K, a charger, a flash light, a camera 193, etc. through different I2C bus interfaces. For example, the processor 110 may be coupled to the touch sensor 180K through the I2C interface, so that the processor 110 communicates with the touch sensor 180K through the I2C bus interface to realize a touch function of the terminal device 100.

The I2S interface may be configured to perform audio communication. In some embodiments, the processor 110 may include a plurality of groups of I2S buses. The processor 110 may be coupled to the audio module 170 through the I2S bus to realize communication between the processor 110 and the audio module 170. In some embodiments, the audio module 170 may transmit an audio signal to the wireless communication module 160 through the I2S interface, to realize a function of answering a call by using a Bluetooth headset.

The PCM interface may further be configured to perform audio communication, and sample, quantize, and encode an analog signal. In some embodiments, the audio module 170 and the wireless communication module 160 may be coupled through a PCM bus interface. In some embodiments, the audio module 170 may transmit an audio signal to the wireless communication module 160 through the PCM interface, so as to realize a function of answering a call by using a Bluetooth headset. Both the I2S interface and the PCM interface may be configured to perform audio communication.

The UART interface is a universal serial data bus, and is used for asynchronous communication. The bus may be a bidirectional communication bus, and switches to-be-transmitted data between serial communication and parallel communication. In some embodiments, the UART interface is generally configured to connect the processor 110 to the wireless communication module 160. For example, the processor 110 communicates with a Bluetooth module of the wireless communication module 160 through the UART interface to implement a Bluetooth function. In some embodiments, the audio module 170 may transmit an audio signal to the wireless communication module 160 through the UART interface, so as to implement a function of playing music by using a Bluetooth headset.

The MIPI interface may be configured to connect the processor 110 to a peripheral device such as a display 194 or a camera 193. The MIPI interface includes a camera serial interface (camera serial interface, CSI), a display serial interface (display serial interface, DSI), and the like. In some embodiments, the processor 110 communicates with the camera 193 through the CSI interface to implement a photographing function of the terminal device 100. The processor 110 communicates with the display 194 through the DSI interface to implement a display function of the terminal device 100.

The GPIO interface may be configured through software. The GPIO interface may be configured for a control signal, or may be configured for a data signal. In some embodiments, the GPIO interface may be configured to connect the processor 110 to the camera 193, the display 194, the wireless communication module 160, the audio module 170, the sensor module 180, etc. The GPIO interface may also be configured as an I2C interface, an I2S interface, a UART interface, an MIPI interface, etc.

The USB interface 130 is an interface conforming to a USB standard specification, and may be specifically a Mini USB interface, a Micro USB interface, a USB Type C interface, etc. The USB interface 130 may be configured to connect to a charger to charge the terminal device 100, or may be used for data transmission between the terminal device 100 and a peripheral device, and may further be configured to connect to a headset to play an audio through the headset. The interface may further be configured to connect to another terminal device such as an AR device.

It may be understood that the interface connection relationship between the modules illustrated in embodiments of the present invention is merely an illustrative description, and does not constitute a limitation on the structure of the terminal device 100. In some other embodiments of this application, the terminal device 100 may further adopt an interface connection mode different from that in the above embodiments, or may adopt a combination of a plurality of interface connection modes.

The charging management module 140 is configured to receive charging input from the charger. The charger may be a wireless charger, or may also be a wired charger. In some embodiments of wired charging, the charging management module 140 may receive charging input from the wired charger through the USB interface 130. In some embodiments of wireless charging, the charging management module 140 may receive wireless charging input through a wireless charging coil of the terminal device 100. While charging the battery 142, the charging management module 140 may further supply power to the terminal device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a quantity of battery cycles, and a battery health status (electric leakage and impedance). In some other embodiments, the power management module 141 may further be arranged in the processor 110. In some other embodiments, the power management module 141 and the charging management module 140 may further be arranged in the same device.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the terminal device 100 may be configured to cover a single communication band or a plurality of communication bands. Different antennas may further be multiplexed to improve the utilization of the antennas. For example, the antenna 1 may be multiplexed as a diversity antenna of a wireless local area network. In some other embodiments, the antenna may be used in combination with a tuning switch.

The mobile communication module 150 may provide a solution applied to the terminal device 100 for wireless communication such as 2G/3G/4G/5G. The mobile communication module 150 may include at least one filter, a switch, a power amplifier, a low noise amplifier (low noise amplifier, LNA), etc. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some of functional modules of the mobile communication module 150 may be arranged in the processor 110. In some embodiments, at least some of functional modules of the mobile communication module 150 and at least some of modules of the processor 110 may be arranged in the same device.

The modem processor may include a modulator and a demodulator. The modulator is configured to modulate a to-be-transmitted low-frequency baseband signal into a medium-highfrequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (not limited to the speaker 170A, the phone receiver 170B, etc.), or displays an image or a video through the display 194. In some embodiments, the modem processor may be an independent component. In some other embodiments, the modem processor may be independent of the processor 110, and the modem processor and the mobile communication module 150 or another functional module may be arranged in a same component.

The wireless communication module 160 may provide a wireless communication solution that is applied to the terminal device 100 and that includes wireless local area networks (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, etc. The wireless communication module 160 may be one or more components in which at least one communication processing module is integrated. The wireless communication module 160 receives an electromagnetic wave through the antenna 2, performs frequency modulation and filtering on an electromagnetic wave signal, and transmits a processed signal to the processor 110. The wireless communication module 160 may further receive a to-be-transmitted signal from the processor 110, perform frequency modulation and amplification on the to-be-transmitted signal, and convert the signal into an electromagnetic wave for radiation through the antenna 2.

In some embodiments, the antenna 1 of the terminal device 100 is coupled to the mobile communication module 150, and the antenna 2 is coupled to the wireless communication module 160, so that the terminal device 100 may communicate with a network and other devices through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technology, etc. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The terminal device 100 implements a display function through the GPU, the display 194, the application processor, etc. The display 194 is configured to display an image, a video, etc.

The terminal device 100 may implement a photographing function through the ISP, the camera 193, the video codec, the GPU, the display 194, the application processor, etc.

The digital signal processor is configured to process a digital signal. Besides processing a digital image signal, the digital signal processor may further process other digital signals. For example, when the terminal device 100 performs frequency selection, the digital signal processor is configured to perform Fourier transform on frequency energy, etc. The video codec is configured to compress or decompress a digital video. The NPU is a neural-network (neural-network, NN) computation processor. The NPU quickly processes input information with reference to a structure of a biological neural network, for example, a transfer mode between human brain neurons, and may further continuously perform self-learning.

The external memory interface 120 may be configured to be connected to an external memory card, such as a Micro SD card, to extend the storage capability of the terminal device 100. The external memory card communicates with the processor 110 through the external memory interface 120 to implement a data storage function, and for example, to store files such as music and a video into the external memory card. The internal memory 121 may be configured to store computer-executable program code, and the executable program code includes instructions.

Through the audio module 170, the speaker 170A, the phone receiver 170B, the microphone 170C, the headset jack 170D, the application processor, etc., the terminal device 100 may implement an audio function, such as music playing and recording.

The pressure sensor 180A is configured to sense a pressure signal, and may convert the pressure signal into an electrical signal. The gyroscope sensor 180B may be configured to determine a moving posture of the terminal device 100. The magnetic sensor 180D includes a Hall sensor. The terminal device 100 may detect opening and closing of a flip leather case by using the magnetic sensor 180D. The acceleration sensor 180E may detect the magnitude of acceleration of the terminal device 100 in all directions (generally in three axes). The magnitude and direction of gravity may be detected when the terminal device 100 is static. It may be further configured to identify a posture of the terminal device, and applied to applications such as switching between landscape and portrait modes and a pedometer. The optical proximity sensor 180G may include, for example, a light-emitting diode (LED) and a light detector, for example, a photo diode. The light-emitting diode may be an infrared light-emitting diode. The terminal device 100 emits infrared light through the light-emitting diode. The ambient light sensor 180L is configured to sense ambient light brightness. The terminal device 100 may adaptively adjust the brightness of the display 194 according to the sensed ambient light brightness. The fingerprint sensor 180H is configured to collect a fingerprint. The temperature sensor 180J is configured to detect a temperature. The touch sensor 180K is also referred to as a "touch panel". The touch sensor 180K may be arranged on the display 194. The touch sensor 180K and the display 194 form a touchscreen which is also referred to as a "touch control screen". The touch sensor 180K is configured to detect a touch operation acting on or near the touch sensor 180K. The bone conduction sensor 180M may obtain a vibration signal.

In addition, the terminal device 100 further includes an air pressure sensor 180C and a distance sensor 180F. The air pressure sensor 180C is configured to measure air pressure. In some embodiments, the terminal device 100 computes the altitude according to an air pressure value measured by the air pressure sensor 180C, so as to assist positioning and navigation.

The distance sensor 180F is configured to measure a distance. The terminal device 100 may measure the distance through infrared light or laser. In some embodiments, in a photographing scenario, the terminal device 100 may measure the distance by using the distance sensor 180F to implement fast focusing.

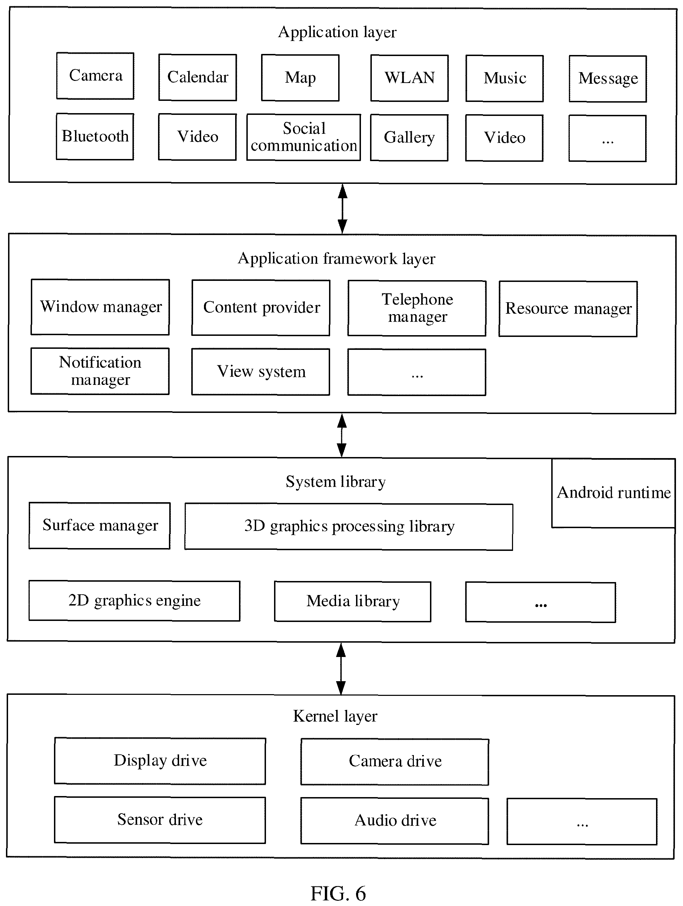

Exemplarily, a software system of the terminal device 100 may use a layered architecture, an event-driven architecture, a microkernel architecture, a micro-service architecture, or a cloud architecture. In the embodiments of this application, a software structure of the terminal device 100 is exemplarily illustrated by taking an Android system with the layered architecture as an example. FIG. 6 is a block diagram of a software structure of a terminal device 100 provided by the embodiments of this application.

In the layered architecture, the software is divided into a plurality of layers, and each layer has a clear role and task. The layers communicate with each other through a software interface. In some embodiments, the Android system is divided into four layers: an application layer, an application framework layer, Android runtime (Android runtime), a system library, a kernel layer, a hardware abstraction layer (hardware abstraction layer, HAL), and a hardware layer from top to bottom.

The application layer may include a series of application packages. As shown in FIG. 6, the application packages may include applications such as Camera, Calendar, Map, WLAN, Music, Message, Gallery, Call, Navigation, Bluetooth, and Video.

The application framework layer provides an application programming interface (Application programming interface, API) and a programming framework for the application at the application layer. The application framework layer includes some predefined functions. As shown in FIG. 6, the application framework layer may include a window manager, a content provider, a telephone manager, a resource manager, a notification manager, a view system, etc.

The window manager is configured to manage a window program. The window manager may obtain a size of the display, judge whether there is a status bar or not, lock the screen, capture the screen, etc.

The content provider is configured to store and obtain data, and enable the data to be accessed by the application. The data may include a video, an image, audio, dialed and answered calls, a browsing history and bookmarks, an address book, etc.

The view system includes visual controls such as a control for displaying a text and a control for displaying a picture. The view system may be configured to construct the application. A display interface may be formed by one or more views. For example, a display interface including an SMS notification icon may include a text display view and a picture display view.

The telephone manager is configured to provide a communication function of the terminal device 100, for example, call state (including a put-through state, a hang-up state, etc.) management.

The resource manager provides various resources such as a localized string, an icon, a picture, a layout file, and a video file for the application.

The notification manager enables the application to display notification information in the status bar, and may be configured to convey a notification-type message. The displayed notification information may automatically disappear after a short stay without user interaction. For example, the notification manager is configured to notify download completion, give a message notification, etc. The notification manager may further be a notification appearing in the status bar at the top of the system in a form of a graph or a scroll bar text, for example, a notification of an application running in the background, or may be a notification appearing on the screen in a form of a dialog window. For example, text information is prompted in the status bar, an alert tone is made, the terminal device vibrates, or an indicator light blinks.

The Android Runtime includes a core library and a virtual machine. The Android runtime is responsible for scheduling and managing the android system.

The core library includes two parts: one part is a functional function needing to be invoked by the Java language, and the other part is a core library of Android.

The application layer and the application framework layer run in the virtual machine. The virtual machine executes Java files at the application layer and the application framework layer as binary files. The virtual machine is configured to perform functions such as obstacle life cycle management, stack management, thread management, security and exception management, and garbage collection.

The system library may include a plurality of functional modules, such as a surface manager (surface manager), media libraries (Media Libraries), a 3D graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of common audio and video formats, and also supports a static image file, etc. The media library may support a plurality of audio and video encoding formats, for example, MPEG4, H.264, MP3, AAC, AMR, JPG, and PNG.

The 3D graphics processing library is configured to implement 3D graphics drawing, image rendering, composition, layer processing, etc.

The 2D graphics engine is a drawing engine for 2D drawing.

The kernel layer is a layer between hardware and software. The kernel layer at least includes a display drive, a camera sensor drive, an audio drive, and a sensor drive.

In order to better understand a paging method provided by the embodiments of this application, a specific implementation process of the method is described below with reference to the accompanying drawings.

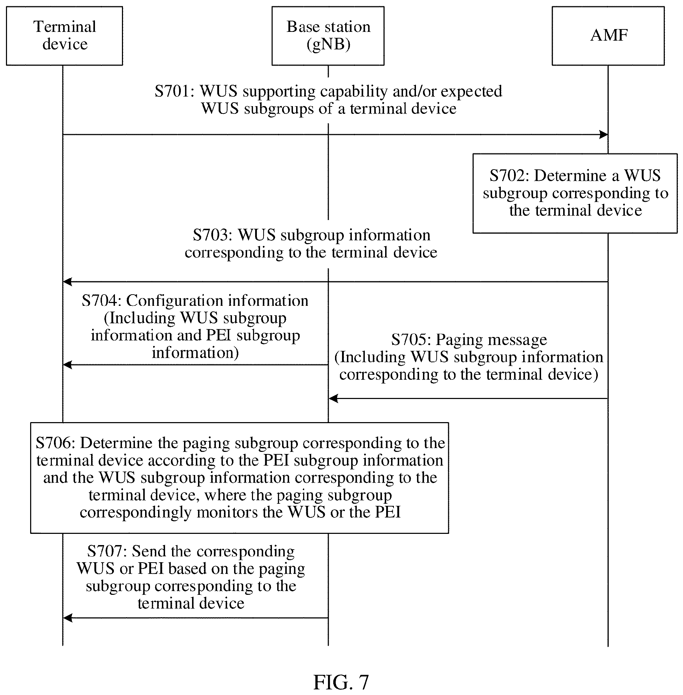

Exemplarily, as shown in FIG. 7, a schematic flow chart of a paging method provided by the embodiments of this application is provided. The flow process may specifically include the following steps:

S701: The terminal device sends the WUS supporting capability and/or the expected WUS subgroup of the terminal device to an AMF.

In some embodiments, the terminal device may send the WUS supporting capability and/or the expected WUS subgroup of the terminal device to the AMF at the network side through non-access stratum (non-access stratum, NAS) signaling.

In some embodiments, a process that the terminal device sends the WUS supporting capability and/or the expected WUS subgroup of the terminal device to the AMF may include: the terminal device sends the WUS supporting capability and/or the expected WUS subgroup of the terminal device to the base station, and the base station forwards the WUS supporting capability and/or the expected WUS subgroup of the terminal device to the core network in a transparent transmission mode.

The terminal device may determine the expected WUS subgroup according to historical paged experience. For example, if the obtained paged probability of the terminal device within a preset historical time period is lower than a specific threshold value, the terminal device may obtain its expected WUS subgroup being a group with low paged probability; and if the obtained paged probability of the terminal device within a preset historical time period is equal to or higher than a feature threshold value, the terminal device may obtain its expected WUS subgroup being a group with high paged probability.

Optionally, in some embodiments, the terminal device may further send its paged probability within the preset historical time period to the core network, so that the core network may determine the WUS subgroup corresponding to the terminal device based on the probability.

In some embodiments, the terminal device may further send the CN subgroup supported by the terminal device (UE support of CN controlled subgrouping) to the AMF, or may send the expected CN subgroup to the AMF. Specifically, the terminal device may send the its supported CN subgroup or the expected CN subgroup to the AMF through the base station (such as gNB) in a transparent transmission mode.

S702: The AMF determines the WUS subgroup corresponding to the terminal device.

In some embodiments, the modes that the AMF determines the WUS subgroup corresponding to the terminal device may be various, and for example, may include: (1) The AMF may determine the WUS subgroup corresponding to the terminal device according to the paged probability of the terminal device, for example, when there is only one group corresponding to the WUS (that is, there is only one WUS subgroup, or there is only one WUS state), the AMF may divide the terminal devices with the paged probability lower than the feature threshold value to the WUS subgroup, and the terminal devices with the paged probability equal to or higher than the specific threshold value are not subjected to WUS subgrouping; and for another example, when there are a plurality of groups corresponding to the WUS (that is, there are a plurality of WUS subgroups, or there are a plurality of WUS states), the AMF may divide the terminal devices with the similar paged probability to the same WUS subgroup, for example, the terminal devices with the paged probability being equal to or greater than 0 and smaller than M are divided into a WUS subgroup 1, the terminal devices with the paged probability being equal to or greater than M and smaller than N are divided into a WUS subgroup 2, and the like. M and N here are respectively values greater than or equal to 0 and smaller than or equal to 1, and M is smaller than N. (2) The AMF may determine the WUS subgroup corresponding to the terminal device based on the expected WUS subgroup of the terminal device. The WUS subgroup corresponding to the terminal deice determined by the AMF may be the same as the expected WUS subgroup of the terminal device.

By aiming at the WUS subgroup mode (1) corresponding to the terminal device above, when there are a plurality of WUS states, an exemplary subgroup logic may be as shown in Table 1 below:

**Table 1**

| | |
|---|---|
| Paged probability of the terminal device | WUS state corresponding to the terminal device |
| Equal to or greater than 0, and smaller than M | WUS subgroup 1 |
| Equal to or greater than M, and smaller than N | WUS subgroup 2 |
| ... | ... |
| Equal to or greater than P, and smaller than 1 | WUS subgroup n (n is an integer greater than 2) |

By aiming at the WUS subgroup mode (1) corresponding to the terminal device above, when there is only one WUS state, an exemplary subgroup logic may be as shown in Table 2 below:

**Table 2**

| | |
|---|---|
| Paged probability of the terminal device | WUS state corresponding to the terminal device |
| Equal to or greater than 0, and smaller than Q (Q is a value greater than 0 and smaller than 1) | WUS subgroup 1 |
| Equal to or greater than Q, and smaller than 1 | NULL |

It needs to be noted that in Table 1 and Table 2, descriptions are only provided by taking the WUS state being the subgroup identification (that is, the WUS subgroup ID is 1, 2, ...n) as an example. In practical application, different WUS states may further be expressed by other types of data, and it is not limited in the embodiments of this application.

In addition, when there is only one WUS state (for example, the WUS state is only WUS subgroup 1 as shown in Table 2), the core network may divide the terminal devices into two types. The terminal devices with the low paged probability (for example, the terminal devices with the paged probability being equal or greater than 1 but smaller than Q) may be divided to the WUS subgroup 1, that is, the WUS state corresponding to the terminal device of this type may be WUS subgroup 1; and the terminal devices with the high paged probability (for example, the terminal devices with the paged probability being equal or greater than Q and smaller than 1) may be divided to have no corresponding WUS subgroup, that is, the WUS state corresponding to the terminal device of this type may be NULL.

It also needs to be noted that in Table 1 and Table 2, descriptions are only provided by taking the WUS division by the AMF on the terminal device according to the paged probability of the terminal device as an example. In practical application, the AMF may further perform WUS division on the terminal device according to data of other types. For example, grouping is performed according to the WUS subgroups to which the terminal device is expected to be divided, and it is not limited in the embodiments of this application.

S703: The AMF sends the WUS subgroup information corresponding to the terminal device to the terminal device through the base station.

In some embodiments, the AMF may send the WUS subgroup information corresponding to the terminal device to the base station. The WUS subgroup information, for example, may include the UE ID corresponding to the terminal device and the corresponding WUS state (or WUS subgroup). After the base station receives the WUS subgroup information, the WUS subgroup information may be transmitted to the terminal device in a transparent transmission mode.

S704: The base station broadcasts the configuration information to the terminal device.

In some embodiments, the base station may periodically broadcast the configuration information.

In some embodiments, the configuration information, for example, may include a total quantity of subgroups supported by the PO, the PEI subgroup information corresponding to the terminal device, and the WUS state information corresponding to the terminal device. The PEI subgroup information corresponding to the terminal device, for example, may be the PEI subgroup ID corresponding to the UE ID of the terminal device, or data (for example, a sequence) corresponding to the UE ID of the terminal device and configured to calculate the PEI subgroup to which the terminal device belongs. The WUS state information corresponding to the terminal device, for example, may be the WUS subgroup ID corresponding to the UE ID of the terminal device, or data (for example, a sequence) corresponding to the UE ID of the terminal device and configured to calculate the WUS subgroup to which the terminal device belongs.

In some embodiments, the configuration information may further include a quantity of subgroups supported by the WUS and other relevant configurations (such as a time-frequency position sent by the WUS).

In some embodiments, the configuration information may further include the CN subgroup information corresponding to the terminal device, for example, the CN subgroup ID corresponding to the terminal device, or data for calculating the CN subgroup to which the terminal device belongs.

Optionally, in some embodiments, the configuration information may further include a correspondence relationship between the PEI subgroups and the WUS subgroup. The correspondence relationship between the PEI subgroups and the WUS subgroups, for example, may include a correspondence relationship between the PEI subgroup ID and the WUS subgroup ID (as shown in Table 3 and Table 4 below).

Exemplarily, as shown in Table 3 and Table 4 below, some examples of mapping relationships between the quantity of WUS subgroups and the PEI subgroups provided by the embodiments of this application are provided.

**Table 3**

| PEI subgroup ID | WUS subgroup ID | Paging monitoring mode |
|---|---|---|
| 0 | 0 | Firstly monitor WUS, and then monitor PEI |
| 1 | 0 | Firstly monitor WUS, and then monitor PEI |
| 2 | 0 | Firstly monitor WUS, and then monitor PEI |
| 3 | 0 | Firstly monitor WUS, and then monitor PEI |
| 4 | 1 | Directly monitor PEI or PO |
| 5 | 1 | Directly monitor PEI or PO |
| 6 | 1 | Directly monitor PEI or PO |
| 7 | 1 | Directly monitor PEI or PO |

**Table 4**

| Subgroup ID | WUS subgroup ID | Paging monitoring |
|---|---|---|
| 0 | 0 | Firstly monitor WUS, and then monitor PEI |
| 1 | 0 | Firstly monitor WUS, and then monitor PEI |
| 2 | 0 | Firstly monitor WUS, and then monitor PEI |
| 3 | 0 | Firstly monitor WUS, and then monitor PEI |
| 4 | NULL | Directly monitor PEI or PO |
| 5 | NULL | Directly monitor PEI or PO |
| 6 | NULL | Directly monitor PEI or PO |
| 7 | NULL | Directly monitor PEI or PO |

It needs to be noted that Table 3 above shows an exemplary mapping relationship between the PEI subgroups and the WUS states when the WUS subgroup ID (or referred to as the WUS state) has a plurality of states (for example, 0 and 1). Table 4 above shows an exemplary mapping relationship between the PEI subgroups and the WUS states when the WUS subgroups (or referred to as the WUS state) have only one state (for example, only 0).

In combination with Table 3, when there are a plurality of WUS states, different PEI subgroups may correspond to different WUS states, and different WUS states may correspond to different paging monitoring modes. Exemplarily, by taking the mapping relationship as shown in Table 3 as an example, when the WUS states are respectively 0 and 1, the PEI subgroups may be divided into two types. The WUS state corresponding to one type of PEI subgroups (for example, the PEIPEI subgroups 0 to 3 as shown in Table 1 above) may be 0, and the corresponding paging monitoring mode may be to firstly monitor WUS and then monitor PEI; and the WUS state corresponding to the other type of PEI subgroups (for example, the PEI subgroups 4 to 7 as shown in Table 1 above) may be 1, and the corresponding paging monitoring mode may be to directly monitor PEI or to directly monitor PO.

In combination with Table 4, when there is only one WUS state, the PEI subgroups may be divided into two types. The WUS state corresponding to one type of PEI subgroups (for example, the PEI subgroups 0 to 3) may be 0, that is, this type of PEI subgroups correspond to the WUS, and the corresponding paging monitoring mode may be to firstly monitor WUS and then monitor PEI. The WUS state corresponding to the other PEI subgroups (for example, PEI subgroups 4 to 7 as shown in Table 4 above) may be NULL, that is, this type of PEI subgroups correspond to no WUS, and the corresponding paging monitoring mode may be to firstly monitor PEI or to directly monitor PO.

When the paging monitoring mode corresponding to the terminal device is to directly monitor PEI or to directly monitor PO, the PEI may be directly monitored according to the solution in R17 or the PO may be directly monitored according to the solution in R15 without monitoring the WUS.

It needs to be noted that for understanding convenience, the descriptions are provided by taking the mapping relationship between the WUS subgroups and the PEI subgroups being the correspondence relationship between the PEI subgroup ID and the WUS subgroup ID as an example in Table 3 and Table 4 above. However, in practical application, the mapping relationship between the WUS subgroups and the PEI subgroups may also be in other modes. For example, the mapping relationship may be the correspondence relationship between data (for example, a sequence) for calculating the PEI subgroups and data (for example, a sequence) for calculating the WUS subgroups, and it is not limited in the embodiments of this application.

It further needs to be noted that the WUS may be a sequence-related signal, for example, an energy (or power)-related sequence signal. The indicated information may be obtained only with low-power-consumption WUR without the need of a complex decoding operation performed by the terminal device. Therefore, the power consumption of the terminal device may be effectively reduced by indicating to the terminal device whether the scheduling information of the PDCCH paging message needs to be monitored and decoded or not through WUS.

In some embodiments, a mode of determining the mapping relationship between the PEI subgroups and the WUS subgroups may be flexibly set according to requirements. For example, in a possible implementation, the base station may divide seldomly paged terminal devices into one or more PEI subgroups based on the paged probability or times of each terminal device, and then associate the PEI subgroup(s) to one WUS state, and the page monitoring mode corresponding to the associated WUS state may be that the WUS needs to be firstly monitored. Therefore, the seldomly paged terminal device may obtain whether it needs to monitor and decode the scheduling information of the complex PDCCH paging message or not based on the simple WUS. If the scheduling information of the PDCCH paging message does not need to be monitored (for example, all of associated terminal devices are not paged), the terminal device may maintain the dormant state, and does not need to consume resources such as electric quantity to perform an additional monitoring and decoding operation.

S705: The AMF sends a paging message to the base station.

In some embodiments, when the network side needs to send signaling or system information to the terminal device, and the terminal device is in a non-connected state, the network side (for example, the AMF) may initiate a paging action. Specifically, the AMF may send the paging message to the base station, and the paging message may include the UE ID of the paged terminal device, and the CN subgroup corresponding to the paged terminal device (for example, the CN subgroup ID corresponding to the paged terminal device), and the WUS subgroup corresponding to the paged terminal device for example, the WUS subgroup ID of the paged terminal device).

In some embodiments, the AMF, for example, may send a paging message to the base station through radio access network paging (radio access network paging, RAN paging) signaling, or the AMF, for example, may send a paging message to the base station through inactive assistance information (inactive assistance information).

In some embodiments, after the base station receives the paging message sent by the network side, the CN subgroup corresponding to the terminal device and the WUS subgroup corresponding to the terminal device may be stored in a local space.

S706: The base station and the terminal device determine the paging subgroup corresponding to the terminal device according to the PEI subgroup information and the WUS subgroup information corresponding to the terminal device, and the paging subgroup correspondingly monitors the WUS or the PEI.

The paging subgroup here may be unique, may refer to a subgroup uniquely associated with the terminal device during PEI receiving, or may refer to a subgroup where the terminal device is actually located during PEI receiving. Different from the paging subgroup described in embodiments in FIG. 4, the paging subgroup in this embodiment of this application may be the PEI subgroup corresponding to the terminal device or the WUS subgroup corresponding to the terminal device.

In some embodiments, when the base station and the terminal device may determine the paging subgroup corresponding to the terminal device according to the total quantity of subgroups supported by the PO corresponding to the terminal device the quantity of the PEI subgroups.

It needs to be noted that the CN subgroup is obtained by the terminal device and the core network through negotiation. However, in some cases, the base station may not support the CN subgroup or only supports some CN subgroups. Therefore, the base station needs to configure the subgroups (i.e., the PEI subgroups) for the terminal device based on the UE ID on the basis of the own capability. Then, the base station and the terminal device may determine the paging subgroup corresponding to the terminal device based on the PEI subgroup configured by the base station and the CN subgroup configured by the core network according to a preset mode.

It needs to be noted further that determining the paging subgroup corresponding to the terminal device based on the CN subgroup information and the PEI subgroup information is to enable the base station and the terminal device to align the information of the subgroup in which the terminal device is located, so that the terminal device in the subgroup may accurately obtain the corresponding PEI in the subsequent process, and the more accurate indication of whether to monitor the PDCCH or not may be obtained.

In some embodiments, a mode of the base station and the terminal device for determining the paging subgroup corresponding to the terminal device may include: determining the paging subgroup ID according to the total quantity of subgroups at the PO associated with the terminal device and the quantity of UE ID-based PEI subgroups at the PO. A relationship among the total quantity of subgroups at the PO, the quantity of the CN subgroups, and the quantity of the PEI subgroups may be: the total quantity of subgroups at the PO-the quantity of the PEI subgroups=the quantity of the CN subgroups. Specifically, if the total quantity of subgroups in the PO is the same as the quantity of PEI subgroups, the ID of the paging subgroup in which the terminal device is located is determined based on the PEI subgroups corresponding to the terminal device. The ID of the paging subgroup, for example, may be the ID of the PEI subgroup corresponding to the terminal device. That is, the paging subgroup is expressed by the CN subgroup in which the terminal device is located. If the quantity of PEI subgroups configured by the base station is smaller than the total quantity of subgroups in the PO, the ID of the paging subgroup in which the terminal device is located is determined based on the CN subgroups corresponding to the terminal device. The ID of the paging subgroup, for example, may be the ID of the CN subgroup corresponding to the terminal device. That is, the paging subgroup is expressed by the CN subgroup in which the terminal device is located.

Optionally, if the quantity of the PEI subgroups configured by the base station is smaller than the total quantity of the subgroups in the PO, the ID of the paging subgroup in which the terminal device is located may be determined based on the WUS subgroups corresponding to the terminal device. The ID of the paging subgroup, for example, may be the ID of the WUS subgroup corresponding to the terminal device. That is, the paging subgroup is expressed by the WUS subgroup in which the terminal device is located.

In some embodiments, there may be a plurality of CN subgroups, and each CN subgroup has a different serial number (i.e. a CN subgroup ID). For example, the quantity of the CN subgroups may be eight, and serial numbers may be respectively 0 to 7. There may be one or more WUS subgroups, and the serial numbers of the WUS subgroups are different from the serial numbers of the CN subgroups. For example, the serial number of each WUS subgroup may be an integer greater than or equal to eight.

In some embodiments, the base station may determine the paging monitoring mode corresponding to the paged terminal device according to the supported WUS subgroup (or WUS state) and the WUS subgroup ID corresponding to the paged terminal device. Specifically, a process that the base station determines the paging monitoring mode corresponding to the paged terminal device may include: the base station may obtain the WUS subgroup corresponding to the paged terminal device according to the paging message sent by the AMF. If the base station supports the WUS subgroup corresponding to the paged terminal device, that is, the quantity of the WUS subgroups (or the WUS states) supported by the base station is greater than or equal to the quantity of the WUS subgroups in which the paged terminal device is located, the base station may determine that the paging monitoring mode corresponding to the paged terminal device is to monitor the WUS, and after the WUS is monitored, directly monitor the PDCCH of the PO (without the need of monitoring the PEI). At this moment, the base station may page the terminal device by sending the WUS according to the paging subgroup to which the paged terminal device belongs. If the base station is provided with no WUS, or the base station is provided with the WUS but does not support the WUS subgroups corresponding to the paged terminal device, that is, the quantity of the WUS subgroups or the WUS states supported by the base station is smaller than the quantity of the WUS subgroups in which the paged terminal device is located (for example, the paged terminal device belongs to a second WUS subgroup (the WUS subgroup ID, for example, is 9), but the base station only supports one WUS subgroup or one WUS state), the base station may determine that the paging monitoring mode of the paged terminal device is to monitor the PEI, and monitor the PDCCH of the PO according to the indication of the PEI . At this moment, the base station may page the terminal device by sending the PEI according to the paging subgroup to which the paged terminal device belongs.

In some embodiments, the terminal device may further determine the paging monitoring mode according to the WUS subgroup to which the terminal device belongs and the received configuration information. Specifically, the process that the terminal device determines the corresponding paging monitoring mode may include: the terminal device may obtain the quantity of the WUS subgroups (or WUS states) supported by the base station according to the received configuration information. When the terminal device obtains that the quantity of the subgroups supported by the WUS of the base station is greater than or equal to the WUS subgroups in which the terminal device is located according to the configuration information, that is, the base station supports the WUS subgroups corresponding to the paged terminal device, the terminal device may determine that its corresponding paging monitoring mode is to monitor the WUS, and after the WUS is monitored, directly monitor the PDCCH of the PO. When the terminal device obtains that the quantity of the subgroups supported by the WUS of the base station is smaller than the WUS subgroups in which the terminal device is located according to the configuration information, that is, the base station does not support the WUS subgroups corresponding to the paged terminal device, the terminal device may determine that its corresponding paging monitoring mode is to monitor the PEI, and monitoring the PDCCH of the PO (without the need of monitoring the WUS) according to the indication of the PEI.

A condition that the base station is configured with the WUS but does not support the WUS subgroup corresponding to the terminal device, for example, may include: if the base station is configured with m WUS subgroups, but the WUS subgroup corresponding to the terminal device after the negotiation with the core network is the (m+1)^{th} subgroup (or another subgroup with a serial number greater than m), the base station may not send the WUS by aiming at the WUS subgroup in which the terminal device is located, and at this moment, the base station does not support the subgroup corresponding to the CN WUS subgroup ID of the terminal device. For example, the base station is only configured with one WUS subgroup (or WUS state), but the network side (for example, AMF) allocates the terminal device to a group with the WUS subgroup ID being 9 (if the serial number of the WUS subgroups configured at the network side starts from 8), that is, the terminal device belongs to the second WUS subgroup. The one WUS subgroup (or WUS state) configured for the base station generally and correspondingly indicates the first WUS subgroup, so the terminal device in a group after the first WUS subgroup may not be indicated by the base station by utilizing the WUS, and at this moment, the base station does not support the WUS subgroup corresponding to the terminal device.

It is worth noting that in the embodiments of this application, the base station configures the paging monitoring mode for the terminal device according to the own performance. If the base station supports the WUS, the configured WUS state supports the WUS subgroup in which the paged terminal device is located, the base station may send the WUS to page the terminal device in a subsequent process, and the terminal device may directly monitor the PDCCH of the PO after detecting the WUS. If the base station does not support the WUS, or the base station supports the WUS but the WUS state configured by the base station does not support the WUS subgroup in which the paged terminal device is located, the base station may send PEI to page the terminal in a subsequent process, and the terminal device may monitor the PDCCH of the PO according to the indication of the PEI after detecting the PEI. For example, when that the corresponding bit of the PEI is 1 is detected, the PDCCH of the PO is directly monitored.

Exemplarily, the WUS sent by the base station for paging the terminal device may carry the paging subgroup ID corresponding to the paged terminal device, and the terminal device may determine whether to directly monitor the PDCCH of the PO or not according to whether the received paging subgroup ID is consistent with the ID of the WUS paging subgroup to which the terminal device belongs or not (that is, the terminal device determines whether the WUS is sent to itself or not, and if YES, the terminal device directly monitors the PDCCH of the PO). Similarly, the PEI sent by the base station for paging the terminal device may also carry the paging subgroup ID corresponding to the paged terminal device, and the terminal device may determine whether to directly monitor the PDCCH of the PO or not according to whether the received paging subgroup ID is consistent with the ID of the paging subgroup to which the terminal device belongs or not (that is, the terminal device determines whether the PEI is sent to itself or not, and if YES, the terminal device monitors the PDCCH of the PO).

In some embodiments, when the base station does not support the WUS subgroup corresponding to the paged terminal device (for example, WUS is not configured, or the WUS state corresponding to the WUS subgroup is not configured), the base station may further indicate a terminal device back group (back group), and the PEI is monitored according to the back group. The back group, for example, may be the PEI subgroup corresponding to the terminal device. That is, the base station may indicate the terminal device to monitor the PEI according to the corresponding paging subgroup ID.

S707: The base station sends the corresponding WUS or PEI before the PO according to the paging subgroup corresponding to the terminal device.

In some embodiments, the base station may send the WUS according to the paging monitoring mode corresponding to the paged terminal device, or may send the PEI before the PO according to the paging monitoring mode corresponding to the paged terminal device. The WUS and PEI sent by the base station may carry the paging subgroup ID corresponding to the paged terminal device, or the WUS and PEI sent by the base station may carry the UE ID corresponding to the terminal device.

In some embodiments, after the base station obtains the paging message, the base station, as an anchor base station, may send the UE ID and/or WUS subgroup ID corresponding to the paged terminal device to other base stations, for example, send the same to other base stations through RAN paging, so that other base stations may page the terminal device together.

According to the paging method provided by the embodiments of this application, by introducing the simpler WUS and respectively and singly indicating whether the PO needs to be monitored or not by using the PEI and the WUS, some terminal devices, especially seldomly paged terminal devices may determine whether they need to monitor and decode the PDCCH or not only based on the WUS, so that the resource consumption of the terminal devices is reduced.

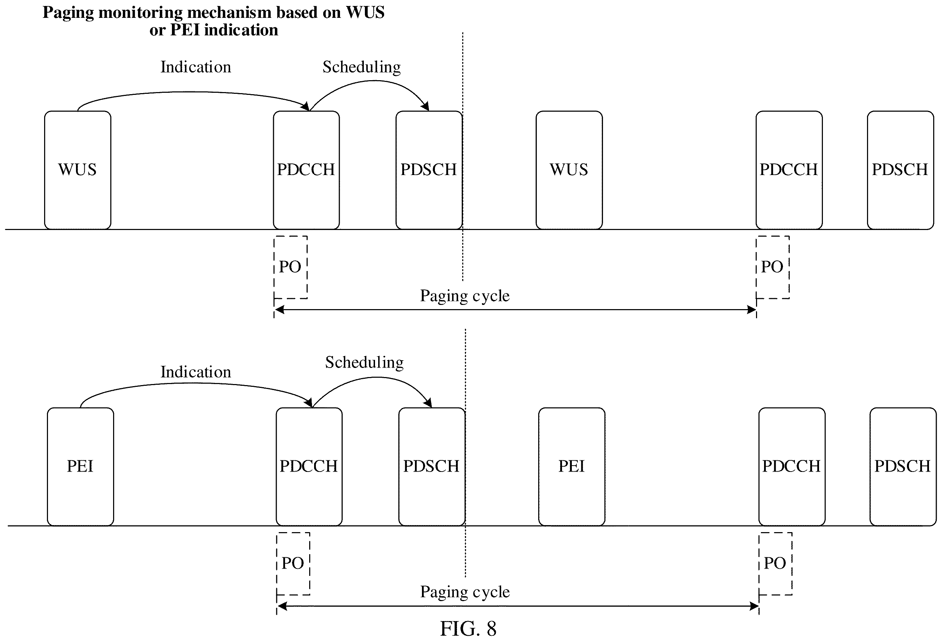

Exemplarily, as shown in FIG. 8, a schematic diagram of performing paging monitoring based on WUS or PEI provided by the embodiments of this application is provided.

In some embodiments, when the paging monitoring mode corresponding to the terminal device is to firstly monitor WUS and then monitor PDCCH of the PO, the terminal device may firstly monitor the WUS before the PO. If the WUS is monitored by the terminal device, the terminal device may monitor the scheduling information of the PDCCH paging message at the PO in the corresponding paging monitoring mode. Then, the terminal device may obtain the paging message at the PDSCH response position according to the scheduling information.

In some other embodiments, when the paging monitoring mode corresponding to the terminal device is to firstly monitor the PO, and then directly monitor the PDCCH of the PO, the terminal device may firstly monitor the PEI. If the PEI is monitored by the terminal device, the terminal device may monitor the scheduling information of the PDCCH paging message at the PO in the corresponding paging monitoring mode. Then, the terminal device may obtain the paging message at the PDSCH response position according to the scheduling information.

According to the paging method provided by the embodiments of this application, by introducing the simpler WUS and respectively and singly indicating whether the PO needs to be monitored or not by using the PEI and the WUS, some terminal devices, especially seldomly paged terminal devices may determine whether they need to monitor and decode the PDCCH or not only based on the WUS, so that the resource consumption of the terminal devices is reduced.

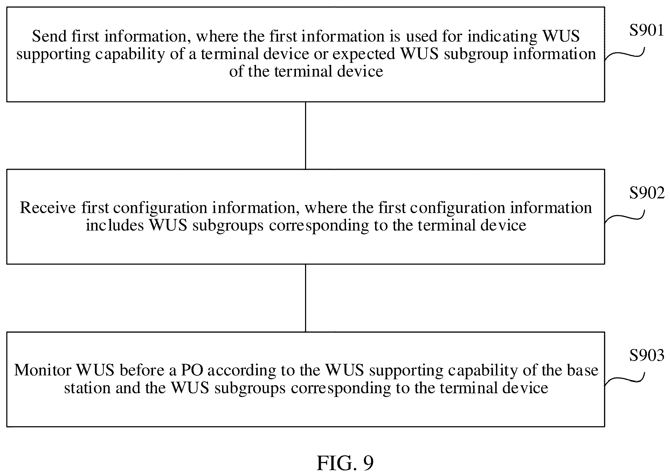

Exemplarily, as shown in FIG. 9, a schematic flow chart of another paging method provided by the embodiments of this application is provided. An execution body of the flow process may include the terminal device. The flow process may specifically include the following steps:
S901: Send first information, where the first information is used for indicating WUS supporting capability of a terminal device or expected WUS subgroup information of the terminal device.

S902: Receive first configuration information, where the first configuration information includes WUS subgroups corresponding to the terminal device.

S903: Monitor WUS before a PO according to the WUS supporting capability of the base station and the WUS subgroups corresponding to the terminal device.

It needs to be noted that in the embodiments of this application, S901 may be an optional step. In a possible implantation, the terminal device may also directly receive the WUS subgroup sent by the network side (for example, AMF). At this moment, the terminal device does not need to apply the network side for the WUS subgroup, or does not need to indicate the own WUS supporting capability or the self expected WUS subgroup for the network side.

In a possible implementation, the WUS supporting capability of the base station, for example, may include a quantity of WUS subgroups supported by the base station, or a quantity of WUS states supported by the base station. According to the WUS supporting capability of the base station and the WUS subgroups corresponding to the paged terminal device, both the base station and the terminal device may obtain whether the base station supports the WUS subgroup in which the paged terminal device is located or not.

In a possible implementation, that the terminal device monitors the WUS before the PO according to the WUS supporting capability of the base station and the WUS subgroup corresponding to the terminal device may specifically include: according to the WUS supporting capability of the base station or the subgroup corresponding to the terminal device, the terminal device determines to monitor the WUS before the PO (that is, the paging monitoring mode is determined to firstly monitor the WUS and then monitor the PO); and then, the terminal device may firstly monitor the WUS before the PO in a determined paging monitoring mode, and after the corresponding WUS is monitored, the terminal device monitors scheduling information of a PDCCH paging message of the PO.

After obtaining the WUS subgroup corresponding to the terminal device itself, the terminal device may obtain whether the base station supports the WUS subgroup corresponding to the terminal device or not according to WUS configuration of the base station. If that the base station supports the WUS subgroup corresponding to the terminal device is obtained, the terminal device may monitor the WUS before the PO. Otherwise, the terminal device directly monitors the PEI or directly monitors the PO.

In some embodiments, to monitor WUS before a PO according to the WUS supporting capability of the base station and the WUS subgroups corresponding to the terminal device specifically includes: monitoring the WUS before the PO when the base station supports the WUS subgroups corresponding to the terminal device; and monitoring paging early indication PEI before the PO, or directly monitoring a physical downlink control channel PDCCH at the PO when the base station does not support the WUS subgroups corresponding to the terminal device.

In some embodiments, paging early indication PEI is monitored before the PO, or the physical downlink control channel PDCCH is directly monitored at the PO when the base station does not support the WUS subgroups corresponding to the terminal device.

In some embodiments, the method further includes: receiving second configuration information broadcasted by the base station. The second configuration information includes the WUS supporting capability of the base station.

In a possible implementation, the configuration information may further include a total quantity of subgroups of the PO and/or the PEI subgroup information corresponding to the terminal device.

In some embodiments, the WUS supporting capability of the base station includes the quantity of the WUS subgroups supported by the base station; and to monitor WUS before a PO according to the WUS supporting capability of the base station and the WUS subgroups corresponding to the terminal device specifically includes: monitoring the WUS before the PO when that the base station supports the WUS subgroups corresponding to the terminal device is obtained according to the quantity of the WUS subgroups supported by the base station.

In some embodiments, the monitoring the WUS before the PO when that the base station supports the WUS subgroups corresponding to the terminal device is obtained according to the quantity of the WUS subgroups supported by the base station specifically includes: monitoring the WUS before the PO when the quantity of the WUS subgroups supported by the base station is greater than or equal to than the quantity of the WUS subgroups corresponding to the terminal device.

In a possible implementation, when the quantity of the WUS subgroups supported by the base station is equal to or greater than the quantity of the WUS subgroups corresponding to the terminal device, it may be determined that the base station supports the WUS subgroups corresponding to the terminal device, and the WUS is sent before the PO.

In some embodiments, that the base station does not support the WUS subgroups corresponding to the terminal device is determined when the quantity of the WUS subgroups supported by the base station is smaller than the quantity of the WUS subgroups corresponding to the terminal device; and the PEI is monitored before the PO, or the PDCCH is directly monitored at the PO.

In some embodiments, the method further includes: monitoring the physical downlink control channel PDCCH of the PO when the WUS is monitored.

In some embodiments, the method further includes: obtaining paging subgroups corresponding to the terminal device; monitoring scheduling information of the PDCCH paging message at the PO when the WUS is monitored, and the WUS includes the paging subgroup information corresponding to the paging device; or monitoring the PDCCH at the PO when the PEI is monitored, and the PEI includes the paging subgroup information corresponding to the terminal device.

In some embodiments, the second configuration information may further include the total quantity of the subgroups of the PO. The first configuration information further includes CN subgroups configured by the core network. The obtaining the paging subgroups corresponding to the terminal device specifically includes: obtaining the paging subgroups corresponding to the terminal device according to the total quantity of the subgroups of the PO and/or the CN subgroups configured by the core network for the terminal device.

In some embodiments, the method further includes: receiving a group fallback indication message, where the group fallback indication message is used for indicating the terminal device to monitor the WUS or monitor the PEI when the base station does not support the WUS subgroups corresponding to the terminal device.

In some embodiments, the method further includes: monitoring the WUS before the PO.

In some embodiments, the method further includes: monitoring the WUS before each PO according to a paging cycle.

In addition, the embodiments of this application further provide a paging method applied to a base station. The method includes: sending second configuration information to the terminal device, where the second configuration information includes WUS supporting capability of the base station; receiving a paging message, where the paging message includes WUS subgroups corresponding to a paged terminal device; and sending the WUS before the PO according to the WUS supporting capability of the base station and the WUS subgroups corresponding to the terminal device.

In some embodiments, the sending the WUS according to the WUS supporting capability of the base station and the WUS subgroups corresponding to the paged terminal device specifically includes: sending the WUS before the PO when that the base station supports the WUS subgroups corresponding to the terminal device is obtained according to a quantity of the WUS subgroups supported by the base station.

In some embodiments, the sending the WUS before the PO when that the base station supports the WUS subgroups corresponding to the terminal device is obtained according to a quantity of the WUS subgroups supported by the base station specifically includes: sending the WUS before the PO when the quantity of the WUS subgroups supported by the base station is equal to or greater than a quantity of the WUS subgroups corresponding to the terminal device.

In some embodiments, the method further includes: sending the PEI before the PO, or directly sending the PDCCH at the PO when the quantity of the WUS subgroups supported by the base station is smaller than the quantity of the WUS subgroups corresponding to the terminal device.

In some embodiments, the method further includes: receiving first information sent by the terminal device, where the first information is used for indicating WUS supporting capability of the terminal device or expected WUS subgroup information of the terminal device; forwarding the WUS supporting capability of the terminal device or the expected WUS subgroup information of the terminal device to a core network; receiving WUS subgroup information configured by the core network for the terminal device; and sending the WUS subgroup information to the terminal device.

In some embodiments, the paging message further includes an identification of the paged terminal device. The method further includes: sending the identification of the paged terminal device and the WUS subgroup information corresponding to the paged terminal device to another base station.

According to the paging method provided by the embodiments of this application, by introducing the simpler WUS and respectively and singly indicating whether the PO needs to be monitored or not by using the PEI and the WUS, some terminal devices, especially seldomly paged terminal devices may determine whether they need to monitor and decode the PDCCH or not only based on the WUS, so that the resource consumption of the terminal devices is reduced.

Based on the same technical idea, the embodiments of this application further provide a terminal device, including one or more processors and one or more memories. The one or more memories have one or more computer programs stored therein, the one or more computer programs include an instruction, and the instruction, when executed by the one or more processors, enables a computer or the processor to implement one or more steps in any one of the above methods.

Based on the same technical idea, the embodiments of this application further provide a base station, including one or more processors and one or more memories. The one or more memories have one or more computer programs stored therein, the one or more computer programs include an instruction, and the instruction, when executed by the one or more processors, enables a computer or the processor to implement one or more steps in any one of the above methods.

Based on the same technical idea, the embodiments of this application further provide a communication system, including a terminal device and a base station. The terminal device and the base station are configured to implement one or more steps of any one of the above methods.

Based on the same technical idea, the embodiments of this application further provide a computer-readable storage medium, the computer-readable storage medium has a computer-executable program instruction stored therein, and the computer-executable program instruction, when running in a computer, enables the computer or a processor to implement one or more steps in any one of the above methods.

Based on the same technical idea, the embodiments of this application further provide a computer program product including an instruction, the computer program product includes computer program code, and the computer program code, when running in a computer, enables the computer or a processor to implement one or more steps in any one of the above methods.

All or some of the above embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on the computer, all or some of the flow processes or functions according to the embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from one website, computer, server, or data center to another website, computer, server, or data center in a wired (for example, by using a coaxial cable, an optical fiber, or a digital subscriber line) or wireless (for example, infrared, radio, or microwave) mode. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the flow processes of the methods in the embodiments may be implemented by a computer program instructing relevant hardware. The program may be stored in a computer-readable storage medium. When the program is executed, the procedures of the foregoing method embodiments are performed. The above storage medium includes: various program code storage media such as an ROM or a random access memory RAM, a magnetic disk, or an optical disc.

The above descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be defined by the protection scope of claims appended hereto.

## Claims

1. A paging method, applied to a terminal device and comprising:
sending first information, wherein the first information is used for indicating wake up service WUS supporting capability of the terminal device or an expected WUS subgroup of the terminal device;
receiving first configuration information, wherein the first configuration information includes WUS subgroups corresponding to the terminal device; and
monitoring WUS before a paging occasion PO according to the WUS supporting capability of a base station and the WUS subgroups corresponding to the terminal device.

2. The method according to claim 1, wherein the monitoring WUS before a paging occasion PO according to the WUS supporting capability of a base station and the WUS subgroups corresponding to the terminal device specifically comprises:
monitoring the WUS before the PO when the base station supports the WUS subgroups corresponding to the terminal device; and
monitoring paging early indication PEI before the PO, or directly monitoring a physical downlink control channel PDCCH at the PO when the base station does not support the WUS subgroups corresponding to the terminal device.

3. The method according to claim 1 or 2, further comprising:
receiving second configuration information broadcasted by the base station, wherein the second configuration information comprises the WUS supporting capability of the base station.

4. The method according to any one of claims 1 to 3, wherein the WUS supporting capability of the base station comprises a quantity of the WUS subgroups supported by the base station; and
the monitoring WUS before a PO according to the WUS supporting capability of a base station and the WUS subgroups corresponding to the terminal device specifically comprises:
monitoring the WUS before the PO when that the base station supports the WUS subgroups corresponding to the terminal device is obtained according to the quantity of the WUS subgroups supported by the base station.

5. The method according to claim 4, wherein the monitoring the WUS before the PO when that the base station supports the WUS subgroups corresponding to the terminal device is obtained according to the quantity of the WUS subgroups supported by the base station specifically comprises:
monitoring the WUS before the PO when the quantity of the WUS subgroups supported by the base station is equal to or greater than a quantity of the WUS subgroups corresponding to the terminal device.

6. The method according to any one of claims 1 to 3, further comprising:
obtaining that the base station does not support the WUS subgroups corresponding to the terminal device when the quantity of the WUS subgroups supported by the base station is smaller than the quantity of the WUS subgroups corresponding to the terminal device; and
monitoring PEI, or directly monitoring the PDCCH at the PO.

7. The method according to any one of claims 1 to 6, further comprising:
monitoring the PDCCH at the PO when the WUS is monitored.

8. The method according to any one of claims 3 to 7, further comprising:
obtaining paging subgroups corresponding to the terminal device;
monitoring the PDCCH at the PO when the WUS is monitored, and the WUS comprises paging subgroup information corresponding to the terminal device; or
monitoring the PDCCH at the PO when the PEI is monitored, and the PEI comprises the paging subgroup information corresponding to the terminal device.

9. The method according to claim 8, wherein the second configuration information may further comprise a total quantity of subgroups of the PO, the first configuration information further comprises CN subgroups configured by a core network, and the obtaining paging subgroups corresponding to the terminal device specifically comprises:
obtaining the paging subgroups corresponding to the terminal device according to the total quantity of subgroups of the PO and/or the CN subgroups configured by the core network for the terminal device.

10. The method according to any one of claims 1 to 9, further comprising:
receiving a group fallback indication message, wherein the group fallback indication message is used for indicating the terminal device to monitor the WUS or monitor the PEI when the base station does not support the WUS subgroups corresponding to the terminal device.

11. The method according to any one of claims 1 to 10, further comprising:
monitoring the WUS before each PO according to a paging cycle.

12. A paging method, applied to a base station and comprising:
sending second configuration information to the terminal device, wherein the second configuration information comprises WUS supporting capability of the base station;
receiving a paging message, wherein the paging message comprises WUS subgroups corresponding to a paged terminal device; and
sending the WUS before the PO according to the WUS supporting capability of the base station and the WUS subgroups corresponding to the terminal device.

13. The method according to claim 12, wherein the sending the WUS according to the WUS supporting capability of the base station and the WUS subgroups corresponding to the paged terminal device specifically comprises:
sending the WUS before the PO when that the base station supports the WUS subgroups corresponding to the terminal device is obtained according to a quantity of the WUS subgroups supported by the base station.

14. The method according to claim 13, wherein the sending the WUS before the PO when that the base station supports the WUS subgroups corresponding to the terminal device is obtained according to a quantity of the WUS subgroups supported by the base station specifically comprises:
sending the WUS before the PO when the quantity of the WUS subgroups supported by the base station is equal to or greater than a quantity of the WUS subgroups corresponding to the terminal device.

15. The method according to claim 13, further comprising:
sending the PEI before the PO, or directly sending the PDCCH at the PO when the quantity of the WUS subgroups supported by the base station is smaller than the quantity of the WUS subgroups corresponding to the terminal device.

16. The method according to any one of claims 12 to 15, further comprising:
receiving first information sent by the terminal device, wherein the first information is used for indicating WUS supporting capability of the terminal device or expected WUS subgroup information of the terminal device;
forwarding the WUS supporting capability of the terminal device or the expected WUS subgroup information of the terminal device to a core network;
receiving WUS subgroup information configured by the core network for the terminal device; and
sending the WUS subgroup information to the terminal device.

17. The method according to claim 12, wherein the paging message further comprises an identification of the paged terminal device, and the method further comprises:
sending the identification of the paged terminal device and the WUS subgroup information corresponding to the paged terminal device to another base station.

18. A terminal device, comprising:
one or more processors; and
one or more memories, wherein
the one or more memories have one or more computer programs stored therein, the one or more computer programs comprise an instruction, and the instruction, when executed by the one or more processors, enables the terminal device to implement the method according to any one of claims 1 to 11.

19. A base station, comprising:
one or more processors; and
one or more memories, wherein
the one or more memories have one or more computer programs stored therein, the one or more computer programs comprise an instruction, and the instruction, when executed by the one or more processors, enables the base station to implement the method according to any one of claims 12 to 17.

20. A communication system, comprising a terminal device and a base station, wherein the terminal device is configured to implement the method according to any one of claims 1 to 11, and the base station is configured to implement the method according to any one of claims 12 to 17.

21. A computer-readable storage medium, having a computer-executable program instruction stored therein, wherein the computer-executable program instruction, when running in a computer, enables the computer to implement the method according to any one of claims 1 to 11 or implement the method according to any one of claims 12 to 17.
